Europäisches Patentamt

European Patent Office

Office européen des brevets

(11) Veröffentlichungsnummer: **0 658 067 A1**

# (12) EUROPÄISCHE PATENTANMELDUNG

(21) Anmeldenummer: **94117875.8**

(22) Anmeldetag: **11.11.94**

(51) Int. Cl.⁶: **H05B 3/74**

(30) Priorität: **06.12.93 DE 4341485**

(43) Veröffentlichungstag der Anmeldung:
**14.06.95 Patentblatt 95/24**

(84) Benannte Vertragsstaaten:
**AT DE ES FR GB IT**

(71) Anmelder: **Bosch-Siemens Hausgeräte GmbH**
**Hochstrasse 17**
**D-81669 München (DE)**

(72) Erfinder: **Hess, Helmut, Dipl.-Ing.**
**Gartenstrasse 13**
**D-83301 Traunreut (DE)**
Erfinder: **Beifuss, Wolfgang, Dipl.-Ing.**
**Eglseer Str. 5**
**D-83339 Chieming (DE)**
Erfinder: **Schweidler, Ernst**
**Am Steinanger 6**
**D-83371 Stein/Traun (DE)**
Erfinder: **Has, Uwe, Dipl.-Ing.**
**Harter Str. 5**
**D-84579 Unterneukirchen (DE)**

(54) **Steuerung für Haushaltgeräte zur Auswertung von Sensorsignalen.**

(57) Die Erfindung bezieht sich auf eine Steuerung für Haushaltgeräte zur Auswertung von Sensorsignalen, insbesondere für Strahlungsheizungen bei Glaskeramik-Kochflächen, wobei die Steuerung sensorisch betriebene, direkte und indirekte Temperaturmessungen der jeweiligen Kochstelle einer Glaskeramik-Kochfläche entschlüsselt und mit typischen Temperaturverläufen T = f(t) vergleicht, so daß die Steuerung eine Topferkennung leistet und daß im Falle eines Kochstellen-Leerlaufes die Steuerung die Strahlungsheizung abschaltet.

Fig.1

EP 0 658 067 A1

Die Erfindung bezieht sich auf eine Steuerung für Haushaltgeräte zur Auswertung von Sensorsignalen, insbesondere für Strahlungsheizungen unter Glaskeramik-Kochflächen.

Glaskeramik-Kochflächen sind mit üblicherweise vier Kochstellen ausgestattet, die durch Strahlungsheizungen betrieben werden können. Die derzeitig verwendeten Materialien, aus denen Glaskeramiken bestehen, sind durch eine schlechte Wärmeleitfähigkeit quer zur Strahlungsrichtung der Strahlungsheizungen gekennzeichnet, was seine Ursache darin hat, daß Glas und glasverwandte Materialien Festkörper-Ionenleiter darstellen. Die Durchlässigkeit für Strahlungswärme der Infrarotsender ist hinreichend optimiert zur Durchlaßcharakteristik der jeweiligen Glaskeramik und den zu erwartenden Kochvorgängen angepaßt. Die auftretenden üblichen Betriebstemperaturen der Glaskeramik für Kochvorgänge der jeweiligen Kochstelle, die eine Strahlungsheizung voraussetzt, liegt in einem Temperaturbereich von 300°C bis 500°C. In Abhängigkeit von diesen Temperaturen verändern sich physikalische Werte der Glaskeramik, beispielsweise die spezifische Wärmeleitfähigkeit, der spezifische elektrische Widerstand und kapazitive Verhaltensweisen. Glaskeramik-Kochflächen nehmen auf Dauer Schaden, wenn sie leerlaufseitig, d.h. ohne oder mit leeren Töpfen, betrieben werden. Es ist daher notwendig, diese Betriebszustände aus Lebensdauer und energetischen Gründen möglichst zu vermeiden.

Aufgabe der Erfindung ist es daher, mit Hilfe einer sensorgespeisten Steuerung Topferkennungen zu realisieren, um den kritischen Leerlauffall zu vermeiden.

Die erfindungsgemäße Anordnung zur Lösung dieser Aufgabe ist dadurch gekennzeichnet, daß die Steuerung sensorisch betriebene direkte und indirekte Temperaturmessungen der jeweiligen Kochstelle einer Glaskeramik-Kochstelle entschlüsselt und mit typischen Temperaturverläufen T = f-(t) vergleicht, daß die Steuerung eine Topferkennung leistet und im Falle eines Kochstellen-Leerlaufs die Strahlungsheizung abschaltet.

Vorteilhafte Ausgestaltungen der Erfindung sind in den Unteransprüchen enthalten. Ein Ausführungsbeispiel nach der Erfindung ist im folgenden anhand der Zeichnung näher beschrieben. Es zeigt:

Fig. 1    eine Kochstelle zur zugehörigen Glaskeramik-Kochfläche,

Fig. 2    Kurvenverläufe für die Funktion T = f-(t) bei Glaskeramik-Kochflächen,

Fig. 3    eine Anordnung von Sensor-Kontaktstreifen auf der Glaskeramik-Kochfläche und

Fig. 4    ein Schaltbild zur Auswertung von Sensorsignalen durch eine Steuerung.

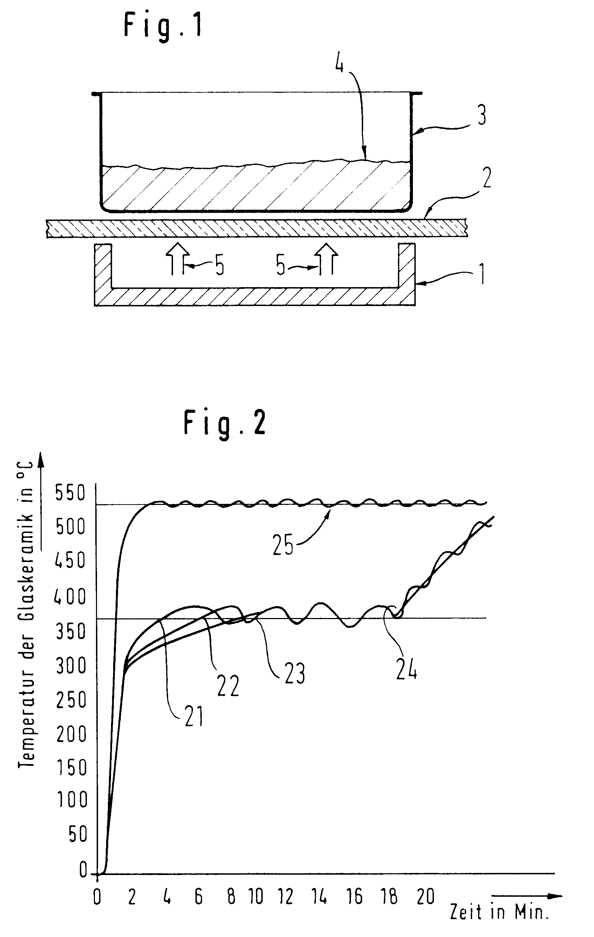

Gemäß Figur 1 ist eine Strahlungsheizung 1, ein Glaskeramik-Kochfeldabschnitt 2, ein Kochgefäß 3 mit Kochgut 4 und eine Energieflußrichtung 5 von der Strahlungsquelle 1 auf die Glaskeramik-Kochfeldfläche 2 gerichtet erkennbar. Die im Heizelement 1 erzeugte Wärmeenergie wird im wesentlichen als Infrarotstrahlung durch die Glaskeramik 2 zum Topfboden geführt und dort in Wärme umgesetzt. Dabei erwärmt sich die Glaskeramik z.T. durch Absorption eines Teiles der durchgehenden Infrarotstrahlung und z.T durch Konvektion der Luft in der Mulde. Die Glaskeramik wird gekühlt durch Wärmeabfuhr in den Topfboden, der auf der Mulde steht. Die schließlich im Topf 3 angelangte Wärme wird aus dem Topf 3 in die Umgebung abgeführt durch Verdampfen von Flüssigkeit aus dem Gargut 4. Weitere Wärmeverluste sind gegeben durch die Infrarotstrahlung der Topfwände bzw. des Topfdeckels und durch Wärmeleitung.

Gemäß Figur 2 sind die Funktionsverläufe T = f(t) dargestellt und sind typische Zeit-Temperaturverläufe. Wenn auf einer eingeschalteten Kochstelle einer Glaskeramik-Kochmulde kein Topf steht, dann erwärmt sich die Glaskeramik weit über das beim Normalbetrieb der Kochstelle üblich Maß. Der dazu charakteristische Kurvenverlauf ist in der Kurve 25 dargestellt. Man ersieht daraus, daß nach 2 bis 3 Minuten eine Endtemperatur von ca. 530° eingeschwungen ist, die der Temperatur der Glaskeramik-Kochfläche entspricht, der den topflosen Zustand charakterisiert. Die Kurven 21, 22, 23 stellen übliche Kurven für Wasserkochvorgänge dar, wobei der Kurvenverlauf 21 für 0,5 l Wasserkochung repräsentativ ist, der Kurvenverlauf 22 für 1 l Wasserkochung und der Kurvenverlauf 23 für 1,5 l Wasserkochung. Läßt man Wasser oder andere Flüssigkeit verkochen und ist letztendlich alle Flüssigkeit verdampft, so nähert sich der Kurvenverlauf dem Verlauf gemäß Kurve 25 an. Es kann daher aus der Glaskeramik-Kochflächentemperatur darauf geschlossen werden, ob der Topf leer ist, ob der Topfinhalt zunehmend verkocht, oder ob eine Normalgarung stattfindet. Die Topferkennung erfolgt dabei sicher im Intervall von zwei bis vier Minuten Ankochzeit für die jeweils eingeschaltete Kochstelle der Glaskeramik-Kochmulde. Die Erfassung der Temperatur der Glaskeramik-Kochfläche kann dabei auf direkte und indirekte Art erfaßt werden. Als direkte Messung der Temperatur kann man die durch Temperaturfühler und Themoelemente herbeigeführte Meßmethode bezeichnen. Hierzu muß der Temperaturfühler gegen direkte Infrarotstrahlung des Heizelementes abgeschattet werden. Um erhebliche Meßfehler zu vermeiden ist es sinnvoll, die Temperatur der Glaskeramik mit mehreren Temperaturfühlern zu erfassen, die möglichst gleichmäßig auf den Umfang der Kochstelle verteilt sind. Mit dieser Methode kann geprüft werden, die korrekte Funktion einzelner Temperaturfühler, die korrekte Lage des Topfes auf der Kochstelle, d.h. ob zentrisch oder nicht zentrisch zur Kochstellenfläche aufgesetzt und es läßt sich das Anbrennen im großflächigen Topfboden auf bestimmte Gebiete des Topfbodens ermittelt. Die direkte Temperaturmessung in Zusammenarbeit mit einer entsprechenden Steuerung garantiert damit auch eine sichere Topferkennung.

Als indirekte Temperaturmessung in diesem Sachzusammenhang wird die Messung des spezifischen Widerstandes der Glaskeramik, wobei der Temperatursensor aus durch aufgedampftes Gold gebildete Leiterbahnen und den von diesen eingeschlossenen Glaskeramik-Kochfeldabschnitten besteht, bezeichnet. Der dabei zwischen diesen Leiterbahnen auftretende elektrische Widerstand genügt der Beziehung $R = K \times \exp.(B/T)$. Dabei ist K eine Leiterbahn-Geometriekonstante, B eine Bezugstemperatur in Grad-Kelvin und T die Realtemperatur in Grad-Kelvin. Bei dieser Art Messung des spezifischen Widerstandes der Glaskeramik sollen die Kontaktstreifen in einer Anordnung auf der Glaskeramik angebracht werden, die eine wechselseitige Störung der Temperaturfühler verschiedener Kochstellen der gleichen Glaskeramik-Kochmulde ausschließen.

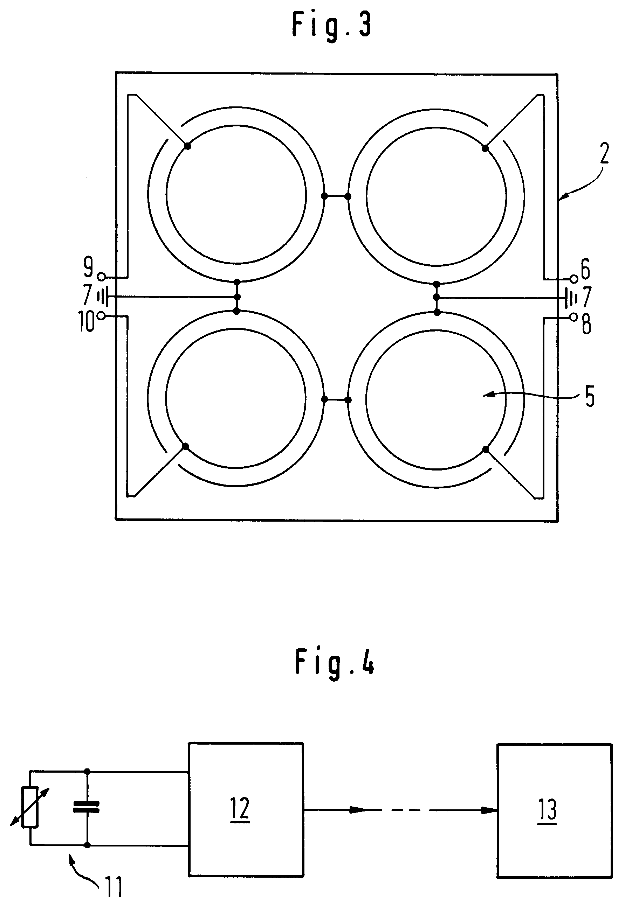

Eine hierfür günstige Anordnung ist gemäß Figur 3 entnehmbar. Figur 3 zeigt im wesentlichen die Meßstellen-Abnahmepunkte 6, 8, 9 und 10 sowie die als gemeinsam sinnvoll umhüllend angeordnete Masseleitung 7. Gemäß Figur 4 ist eine Methode dargestellt, wie mit Hilfe dieses komplexen Glaskeramik-Teilwiderstandes und einer parallel geschalteten Kapazität ein RC-Glied 11 entsteht und als Eingangsgröße für einen astabilen Multivibrator 12 Anwendung findet. Ein über nicht dargestellte, nachgeschaltete Impulsformer aufbereiteter Signalweg führt auf eine Auswerteschaltung 13, die die Widerstandsänderungen als Temperaturverlauf entschlüsselt. Der mittels Sensor ermittelte temperaturabhängige, komplexe Widerstand eines sensorüberwachten Glaskeramik-Kochfeldabschnittes ist gemäß Figur 4 als frequenzbestimmende Einheit eines Frequenzgenerators angeordnet. Die damit erzeugte Frequenz ist indirekt proportional zum Widerstand der Glaskeramik. Die durch den Schaltungsverlauf gemäß Figur 4 vorgenommene Frequenzanalyse erzeugt eine auswertbare Frequenz, die direkt proportional zur Temperaturerhöhung der Glaskeramik-Kochfläche ist. Da die Temperatur der Glaskeramik innerhalb einer Kochfläche stark vom Wärmeentzug des aufgesetzten Topfes und des in diesem befindlichen Gargutes abhängig ist, kann mit Hilfe der angegebenen Schaltungsanordnung auf das Gargutverhalten rückgeschlossen werden.

Die Steuerung, die die durch eine Auswerteschaltung erzeugte Impulsfrequenz in eine entsprechende Glaskeramik-Kochfeldtemperatur wandelt, nimmt nunmehr einen Soll-Ist-Temperaturvergleich charakteristischer Temperaturverläufe gemäß Figur 2 vor. Dabei wird eine Topferkennung prinzipieller Art geleistet, eine unsachgemäße Topfplazierung erkannt, ein leergekochter Topf festgestellt und es kann eine optische bzw. akustische Signalgebung für den Fall der Topferkennung angeordnet sein. Erkennt die Steuerung einen leer aufgesetzten oder nicht vorhandenen Topf auf der Kochstelle der Glaskeramik-Kochfläche, dann schaltet sie die Energiezufuhr ab. Da die Steuerung entsprechend dem Soll-Istwertvergleich charkteristischer Temperaturverläufe beginnende Kochprozesse erkennen kann, wird die Energiezufuhr entsprechend dem Gargutzustand geregelt.

Als besonders vorteilhaft für die Topferkennung nach den geschilderten Methoden der erfindungsgemäßen Lösung hat sich herausgestellt, daß die relativ billig und einfach relisierbare Methode bereits nach zwei bis vier Minuten einen Kochstellen-Leerlauf erkennen kann, wobei die Erkennungsmöglichkeiten vom nicht exakten Aufsetzen eines Kochgefäßes und einem frühzeitigen Verkochen von Gargut in Kochgefäßen ebenfalls durch diese Topferkennungsmethode geleistet werden können.

## Patentansprüche

1. Steuerung für Haushaltgeräte zur Auswertung von Sensorsignalen, insbesondere für Strahlungsheizungen bei Glaskeramik-Kochflächen, **dadurch gekennzeichnet,** daß die Steuerung sensorisch betriebene, direkte und indirekte Temperaturmessungen der jeweiligen Kochstelle einer Glaskeramik-Kochfläche entschlüsselt und mit typischen Temperaturverläufen T = f(t) vergleicht, daß die Steuerung eine Topferkennung leistet und daß im Falle eines Kochstellen-Leerlaufes die Steuerung die Strahlungsheizung abschaltet.

2. Steuerung zur Auswertung von Sensorsignalen nach Anspruch 1, dadurch gekennzeichnet, daß die Steuerung als Beispiel indirekter Temperaturmessung, wobei ein mittels Sensor ermittelter temperaturabhängiger, komplexer Widerstand eines Glaskeramik-Kochfeldabschnittes als frequenzbestimmende Einheit eines Frequenzgenerators angeordnet ist, die durch eine Auswerteschaltung erzeugte Impulsfrequenz in eine entsprechende Glaskeramik-Kochfeldtemperatur wandelt.

3. Steuerung zur Auswertung von Sensorsignalen nach Anspruch 1, dadurch gekennzeichnet, daß die Steuerung bei direkter Temperaturmessung mittels Temperaturfühler die Auswerteschaltung überbrückt und einen Soll-Ist-Temperaturvergleich direkt vornimmt.

4. Steuerung zur Auswertung von Sensorsignalen nach Anspruch 1, dadurch gekennzeichnet, daß die Steuerung durch Soll-Ist-Temperaturvergleich charakteristische Temperaturverläufe gemäß Figur 2 eine Sofort-Topferkennung leistet.

5. Steuerung zur Auswertung von Sensorsignalen nach Anspruch 1, dadurch gekennzeichnet, daß die Steuerung durch Soll-Ist-Temperaturvergleich charakteristischer Temperaturverläufe gemäß Figur 2 eine unsachgemäße Topfplazierung erkennt.

6. Steuerung zur Auswertung von Sensorsignalen nach Anspruch 1, 4, dadurch gekennzeichnet, daß die Steuerung durch Soll-Ist-Temperaturvergleich charakteristischer Temperaturverläufe gemäß Figur 2 einen leeren Topf erkennt und danach die Energiezufuhr abschaltet.

7. Steuerung zur Auswertung von Sensorsignalen nach vorgenannten Ansprüchen, dadurch gekennzeichnet, daß die Steuerung durch Soll-Ist-Temperaturvergleich charakterisierte Temperaturverläufe gemäß Figur 2 erkannte Leerlauf-Zustände einer Glaskeramik-Kochstelle und unsachgemäße Topfplazierung einer Glaskeramik-Kochstelle optisch oder akustisch signalisiert.

8. Steuerung zur Auswertung von Sensorsignalen nach Anspruch 1, dadurch gekennzeichnet, daß die Steuerung durch Soll-Ist-Temperaturvergleich charakteristischer Temperaturverläufe gemäß Figur 2 beginnende Kochprozesse erkennt und die Energiezufuhr dem Gargut-Temperaturverhalten anpaßt.

9. Steuerung zur Auswertung von Sensorsignalen nach Anspruch 1, dadurch gekennzeichnet, daß der als Sensor wirkende Glaskeramik-Kochfeldabschnitt mit einem Kontaktstreifen-Muster gemäß Figur 3 ausgerüstet ist.

# Fig.1

# Fig.2

# Fig.3

# Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | US-A-4 740 664 (T.R. PAYNE ET AL.) <br> * Spalte 6, Zeile 66 - Spalte 10, Zeile 3; Abbildungen 1-6 * <br> * Spalte 12, Zeile 21 - Spalte 18, Zeile 14; Abbildungen 7-11 * <br> --- | 1,3-9 | H05B3/74 |
| Y | EP-A-0 467 134 (SCHOTT GLASWERKE) <br> * Spalte 7, Zeile 18 - Spalte 12, Zeile 3; Abbildungen 1-6 * | 1,3-9 | |
| A | | 2 | |
| | --- | | |
| Y | DE-A-35 30 403 (PHILIPS PATENTWERWALTUNG) <br> * Seite 12, Zeile 6 - Seite 16, Zeile 21; Abbildung 16 * <br> --- | 8 | |
| A | EP-A-0 478 081 (LABORATOIRES D'ELECTRONIQUE PHILIPS) <br> --- | | |
| A | EP-A-0 553 425 (WHIRLPOOL EUROPE) <br> --- | | |
| A | EP-A-0 147 056 (THORN EMI) <br> ----- | | |

**RECHERCHIERTE SACHGEBIETE (Int.Cl.6)**

H05B

Der vorliegende Recherchenbericht wurde für alle Patentansprüche erstellt

| Recherchenort | Abschlußdatum der Recherche | Prüfer |
|---|---|---|
| DEN HAAG | 8. Februar 1995 | Albertsson, E |

EPO FORM 1503 03.82 (P04C03)